(19) 

Europäisches
Patentamt
European
Patent Office
Office européen
des brevets

(11) **EP 4 697 360 A1**

(12) **EUROPEAN PATENT APPLICATION**
published in accordance with Art. 153(4) EPC

(43) Date of publication:
**18.02.2026 Bulletin 2026/08**

(21) Application number: **24787780.6**

(22) Date of filing: **26.01.2024**

(51) International Patent Classification (IPC):
***G21C 5/14*** *(2006.01)*

(52) Cooperative Patent Classification (CPC):
Y02E 30/30

(86) International application number:
**PCT/CN2024/074255**

(87) International publication number:
**WO 2024/212674 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.04.2023 CN 202310382868**

(71) Applicants:
- **China Nuclear Power Technology Research
  Institute Co., Ltd.
  Shenzhen, Guangdong 518031 (CN)**
- **China General Nuclear Power Corporation
  Shenzhen, Guangdong 518028 (CN)**

- **CGN Power Co., Ltd.
  Shenzen, Guangdong 518028 (CN)**

(72) Inventors:
- **LIANG, Zhenhui
  Shenzhen, Guangdong 518031 (CN)**
- **LI, Xian
  Shenzhen, Guangdong 518031 (CN)**
- **BIAN, Jiawei
  Shenzhen, Guangdong 518031 (CN)**
- **SU, Genghua
  Shenzhen, Guangdong 518031 (CN)**

(74) Representative: **Zacco Sweden AB
P.O. Box 5581
Löjtnantsgatan 21
114 85 Stockholm (SE)**

(54) **NUCLEAR POWER SUPPLY REACTOR CORE STRUCTURE AND PROCESSING METHOD
THEREFOR**

(57)    A nuclear power supply reactor core structure
and a processing method therefor. The nuclear power
supply reactor core structure comprises a reactor core
base body (1), fuel channels (2), and gas channels (3);
the reactor core base body (1) is made of metal; the fuel
channels (2) are arranged in the reactor core base body
(1); the gas channels (3) are used for circulation of a
cooling medium, a plurality of gas channels (3) are pro-
vided, and the gas channels (3) are circumferentially
arranged on the outer sides of the fuel channels (2).
The processing method for the nuclear power supply
reactor core structure comprises: obtaining a plurality
of sheet layers; performing hole processing on the sheet
layers in the axial direction of the sheet layers to form fuel
channels (2) and gas channels (3); and stacking and
fixing adjacent sheet layers in the axial direction of the
sheet layers.

FIG. 1

EP 4 697 360 A1

**Description**

CROSS-REFERENCE TO RELATED APPLICATIONS

This application claims priority to Chinese Patent Application No. 2023103828681, entitled "REACTOR CORE STRUCTURE OF NUCLEAR POWER SOURCE AND PROCESSING METHOD THEREFOR", filed on April 12, 2023, the entire content of which is incorporated herein by reference.

TECHNICAL FIELD

The present application relates to the technical field of nuclear power sources, and more particularly, to a reactor core structure of a nuclear power source and a processing method therefor.

BACKGROUND

Nuclear power sources have significant application value in space, deep-sea, land-based fixed and mobile power sources, and are capable of long-term unattended operation. A conventional heat pipe reactor is a popular reactor type of a small reactor of a nuclear power source. The heat pipe reactor has advantages under low-power conditions. However, the power of a heat pipe reactor is directly proportional to the number of heat pipes. As the power increases, the number of heat pipes increases proportionally, which not only increases the difficulty in designing, processing, installing, and other steps, but also significantly increases the volume of the reactor core. Furthermore, an external cooling device needs to be arranged for the heat pipe reactor to perform a secondary heat exchange for the medium inside the heat pipes.

A conventional gas-cooled fast reactor generally has a relatively high power density and a relatively high outlet temperature of the reactor core. The reactor core typically uses materials with extreme high-temperature resistance, such as ceramics. However, the thermal conductivity of gas is relatively low, and the amount of heat removed by natural circulation in the event of a rupture is limited, which poses significant challenges to the design of a residual heat dissipation system. The constraints on reactor core material selection and the difficulty in removing residual heat are the main reasons for the relatively slow development of gas-cooled fast reactors among the fourth-generation reactors.

Therefore, the aforementioned conventional gas-cooled fast reactors have the problems of constraints on reactor core material selection and difficulty in removing residual heat.

SUMMARY

A reactor core structure of a nuclear power source and a processing method therefor are provided according to various embodiments of the present application.

A reactor core structure of a nuclear power source is provided according to an embodiment of the application. The reactor core structure of the nuclear power source includes: a reactor core body, a material of the reactor core body being a metal material; a fuel channel disposed in the reactor core body; and gas channels configured to allow cooling medium to flow. The number of the gas channels is multiple, and the gas channels are disposed circumferentially outside the fuel channel.

In an embodiment, an aperture of each of the gas channels is equal to or less than 3 mm.

In an embodiment, the material of the reactor core body is stainless steel.

In an embodiment, the material of the reactor core body is type 316 stainless steel.

In an embodiment, the reactor core structure of the nuclear power source includes a first heat pipe, and the first heat pipe is disposed in the reactor core body.

In an embodiment, the reactor core structure of the nuclear power source further includes a first expansion member. A hole is disposed in the reactor core body and configured to allow the first heat pipe to pass through; an expansion gap is formed between an inner circumference of the hole and an outer circumference of the first heat pipe; and the first expansion member is filled and arranged in the expansion gap, and the first expansion member is made of a thermally conductive material.

In an embodiment, the reactor core structure of the nuclear power source further includes a reflector, a reactor core power control mechanism, and a second heat pipe; the reactor core power control mechanism is disposed in the reflector; the second heat pipe is disposed in the reflector; and the second heat pipe is arranged side by side with the reactor core power control mechanism.

In an embodiment, a material of the reflector is a thermally conductive material.

In an embodiment, multiple second heat pipes are arranged along radial directions of the reflector.

In an embodiment, multiple fuel channels are arranged, and any three mutually adjacent fuel channels are arranged in an equilateral triangular arrangement.

In an embodiment, the reactor core body is provided with slits for relieving stress; each of the slits is arranged along the axial direction of the reactor core body; and multiple slits are distributed along a circumferential direction of the reactor core body.

In an embodiment, the reactor core body is processed and formed by three-dimensional printing, or the reactor core body is formed by stacking and connecting multiple layers.

Another embodiment of the application provides a processing method for a reactor core structure of a nuclear power source, based on the reactor core structure of the nuclear power source above, and including: obtaining multiple layers; performing hole machining on each layer along the axial direction thereof to form the fuel channel and the gas channels; and stacking and fixedly connecting adjacent layers along axial directions thereof.

In an embodiment, stacking and fixedly connecting adjacent layers along axial directions thereof includes: connecting the adjacent layers into an integral whole by diffusion welding.

In an embodiment, performing the hole machining on each layer along the axial direction thereof includes: obtaining a corresponding gas volume flow rate based on thermal engineering calculation, and obtaining a corresponding gas flow cross-sectional area based on a preset gas flow velocity; selecting a temperature difference between the reactor core body and cooling medium based on material and temperature constraints of the reactor core body; deriving a heat exchange area based on the temperature difference between the reactor core body and the cooling medium; and obtaining apertures and the number of the gas channels based on the heat exchange area and the gas flow cross-sectional area.

The details of one or more embodiments of the present application are set forth in the accompanying drawings and description below. Other features, objectives, and advantages of the present application will become apparent from the description, drawings, and claims.

DESCRIPTION OF THE DRAWINGS

In order to illustrate the technical solutions in the embodiments of the present application or the conventional technology more clearly, drawings required for describing the embodiments or the conventional technology will be briefly described hereinafter. Obviously, the drawings in the following description are only embodiments of the present application. For those of ordinary skill in the art, other drawings can also be obtained from the disclosed drawings without any creative efforts.

FIG. 1 is a schematic view of a reactor core structure of a nuclear power source according to one or more embodiments.

FIG. 2 is a schematic flowchart of a processing method for the reactor core structure of the nuclear power source according to one or more embodiments.

In the drawings:

1 - reactor core body; 2 - fuel channel; 3 - gas channel; 4 - first heat pipe; 5 - reflector; 6 - reactor core power control mechanism; 7 - shutdown rod hole; 8 - first expansion member; 9 - second heat pipe.

DETAILED DESCRIPTION OF THE EMBODIMENTS

The technical solutions of embodiments of the present application will be described clearly and completely with reference to the accompanying drawings. It is apparent that the described embodiments represent only a portion of the embodiments of this application, but not all embodiments. All other embodiments obtained by a person of ordinary skill in the art based on the embodiments of the present application without creative efforts shall fall within the scope of protection of this application.

In order to make the above objectives, features and advantages of the present application clearer and better understood, specific implementations of the present application are described in detail hereinafter with reference to the accompanying drawings. In the following description, many specific details are set forth to make the present application to be fully understood. However, the present application can be implemented in many other ways different from those described herein, and those skilled in the art can make similar improvements without departing from the connotation of the present application. Therefore, the present application is not limited by the specific embodiments disclosed below.

In the description of the present application, it should be understood that if there appear the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc., the orientation or position relationships indicated by these terms are based on the orientation or position relationships shown in the accompanying drawings and are merely intended to facilitate the description of the present application and simplify the description, rather than indicating or implying that the indicated device or element must have a particular orientation or be constructed and operated in a particular orientation, and therefore are not to be interpreted as limitation on the present application.

In addition, if there appear terms "first" and "second", etc., these terms are used for descriptive purposes only but cannot be interpreted as indicating or implying relative importance or implicitly specifying the number of indicated technical features. Thus, the features defined as "first" and "second" may explicitly or implicitly include at least one of these features. In the description of the present application, if the term "multiple" appears, the "multiple" means at least two, such as two, three, etc., unless otherwise clearly and specifically defined.

In the present application, unless otherwise clearly specified and limited, if the terms "mount", "connection", "communication", "fix", etc., appear, these terms should be understood in a broad sense, for example, may be a fixed connection or a detachable connection, or an integrated connection; or may be a mechanical connection or an electrical connection; or may be a direct connection or an indirect connection through an intermediate medium; or may be an internal communication between two elements or an interaction relationship between two elements, unless otherwise clearly defined. Those of ordinary skill in the art can understand the specific meanings of the above terms in the present application according to specific situations.

In the present application, unless otherwise clearly specified and limited, if there is a description that a first feature is "above" or "under" a second feature, etc., or similar description, it may mean that the first and second features are in direct contact, or the first and second features are in indirect contact through an intermediate medium. Moreover, the first feature being "on top of", "above" and "over" the second feature may mean that the first feature is directly above or obliquely above the second feature, or simply means that the horizontal height of the first feature is greater than that of the second feature. The first feature being "under", "beneath" and "below" the second feature may mean that the first feature is directly below or obliquely below the second feature, or simply means that the horizontal height of the first feature is less than the second feature.

It should be noted that if an element is referred to as being "fixed to" or "disposed in" another element, it may be directly on the other element or there may also be an intermediate element. If an element is considered to be "connected to" another element, it may be directly connected to the other element or there may be an intermediate element as well. If present, the terms "vertical", "horizontal", "upper", "lower", "left", "right" and similar expressions used in the present application are only for illustrative purposes but not intended to be the only implementation.

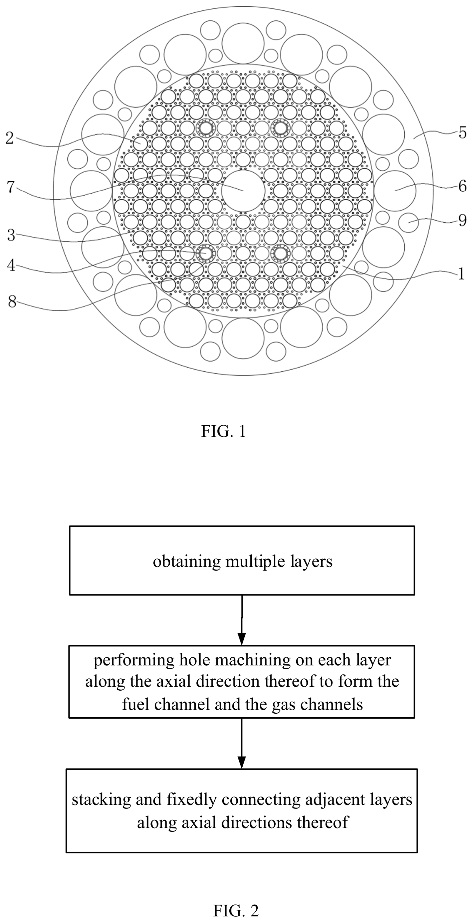

Referring to FIG. 1, FIG. 1 shows a schematic view of a reactor core structure of a nuclear power source according to an embodiment of the present application. The reactor core structure of the nuclear power source provided by an embodiment of the present application includes a reactor core body 1, a fuel channel 2, and gas channels 3. The fuel channel 2 is disposed in the reactor core body 1. The number of the gas channels 3 is multiple, and the gas channels 3 are disposed circumferentially outside the fuel channel 2. The gas channels 3 are configured to allow cooling medium to flow, so as to conduct heat generated by the fuel to the outside of the reactor core body 1. The gas channels 3 are configured to reduce a heat exchange temperature difference between the cooling medium inside the gas channels 3 and the reactor core body 1 under the condition that the volume of the reactor core body 1 remains unchanged, so that the material of the reactor core body 1 can be replaced with other material having heat resistance lower than that of ceramics. To meet the processing requirements of the gas channels 3 and also taking into account the requirements for the reactor core body 1 in the application scenarios of the nuclear power source, the material of the reactor core body 1 can be a metal material. That is, any metal material, which can meet the requirements for using in the nuclear radiation and high-temperature environment of the reactor core, can meet the requirements for arranging multiple gas channels 3, containing fuels and prevent leakage of radioactive substances, is acceptable. The reactor core body 1 made of metal material can not only conduct heat through the gas channels 3 but also rapidly and autonomously dissipate heat to the outside after a reactor shutdown.

In such a configuration, the reactor core structure of the nuclear power source, by reducing the heat exchange temperature difference between the cooling medium and the reactor core body 1, enables metal materials with temperature resistance lower than ceramics to be used for manufacturing the reactor core body 1. The present application primarily targets a gas-cooled fast reactor of a nuclear power source with an electrical power in a range from 200 kW to 10 MW. In the present application, under the condition that the volume of the reactor core body 1 remains unchanged, the multiple small gas channels 3 can significantly increase the effective heat exchange area between the cooling medium and the reactor core body 1, thereby effectively reducing the temperature difference between the cooling medium and the heat exchange wall surface of the gas channels 3, and greatly enhancing the heat transfer efficiency between the cooling medium and the reactor core body 1, allowing metal materials to be used for manufacturing the reactor core body 1. The impact of a high-temperature difference on the material selection for the reactor core body 1 is substantially reduced, and furthermore, the reactor core body 1 can rapidly and autonomously dissipate heat to the outside after the reactor shutdown, thereby solving the technical problems of constraints on reactor core material selection and difficulty in removing residual heat in the conventional gas-cooled fast reactor.

The cooling medium can be, but is not limited to, helium, helium-xenon mixture, or supercritical carbon dioxide. In an embodiment, by arranging multiple gas channels 3 with small aperture in the reactor core body 1, these gas channels 3 serve as the main cooling structure during the operation of the gas-cooled fast reactor. The reactor core is cooled through the gas channels 3, and compared with other types of reactors, such as sodium-cooled reactors, lead-based reactors, molten salt reactors, etc., the present application adopts a direct turbine power generation mode by using the primary circuit gas, which eliminates a steam generator for secondary heat exchange and a secondary loop system, thereby reducing system complexity and significantly decreasing the system volume. In this embodiment, through a low power density of the reactor core itself and the increased effective heat exchange area between the reactor core body 1 and the cooling medium, the heat exchange temperature difference is substantially reduced. Thus, for cooling medium like supercritical carbon dioxide, a problem of heat conduction deterioration caused by changes in physical properties can be effectively mitigated.

In an embodiment, the fuel channels 2 can be dispersedly arranged in the reactor core body 1, surrounded by gas channels 3 to facilitate smooth heat dissipation under normal operating conditions. In accident conditions, due to the good thermal conductivity of the reactor core body 1, heat can be conducted to the first heat pipe 4, the second heat pipe 9 in the reflector 5, and the external environment of the reactor core vessel. For reactor core residual heat removal, under conditions of very low reactor core power, the reactor core heat can be directly conducted radially to the external environment of the reactor core vessel. Under conditions of medium reactor core power, the reactor core heat can be conducted radially to the second heat pipe 9 in the reflector 5, and dissipated by the second heat pipe 9 and the outer wall of the reactor core vessel. Under conditions of a relatively high reactor core power, the reactor core heat needs to be dissipated by a combination of the first heat pipe 4 within the reactor core body 1, the second heat pipe 9 in the reflector 5, and the outer wall of the reactor core vessel.

It can be seen that, in this application, the design for reactor core residual heat removal can be set according to specific conditions. That is, options include not arranging the first heat pipe 4 and the second heat pipe 9, arranging only the second heat pipe 9 in the reflector 5, or arranging the second heat pipe 9 in the reflector 5 and the first heat pipe 4 in the reactor core body 1. In addition, the number of the first heat pipe 4 and the second heat pipe 9 can also be determined based on actual conditions. The reactor core body 1 is made of a metal material, which is suitable for processing, thereby enabling the gas channels 3 with smaller apertures and higher density to be formed, and enabling the reactor core body 1 to have good thermal conductivity and dissipate heat more autonomously to the outside.

In some embodiments, the aperture of each gas channel 3 is equal to or less than 3 millimeters. Optionally, the aperture of the gas channel 3 can be selected as 1.5 millimeters, and the specific dimension of the aperture can be determined based on actual calculations and processing capabilities. The electrical power of the gas-cooled fast reactor nuclear power source is between 200 kW and 10 MW. In the case where other factors like the volume of the reactor core body 1 remain the same, the gas channels 3 can be densely distributed around each fuel channel 2, which increases the effective heat exchange area between the cooling medium and the reactor core body 1, thereby reducing the temperature difference between the gas and the wall surface of the body. Primarily considering the current manufacturing level of the gas turbines, as well as the temperature and stress tolerance of the material of the reactor core body 1, the temperature of the cooling medium at the outlet of the reactor core is configured to not exceed 650°C.

In an embodiment, the material of the reactor core body 1 can be, but is not limited to, stainless steel, which offers good heat resistance, high temperature resistance and corrosion resistance, and excellent weldability. Specifically, the material of the reactor core body 1 is type 316 stainless steel, which enables the reactor core body 1 to have better high-temperature strength and corrosion resistance and to be used under harsh conditions such as nuclear radiation.

Referring to FIG. 1, in some embodiments, the reactor core structure of the nuclear power source includes the first heat pipes 4. The first heat pipes 4 are dispersedly arranged in the reactor core body 1. An accommodating hole allowing each first heat pipe 4 to pass through is formed in the reactor core body 1. Based on physical and thermal analysis, locations with higher temperatures during normal operation and under accident conditions can be identified. Some accommodating holes can be formed to replace some fuel channels 2 and some gas channels 3 to allow the first heat pipes 4 to pass through. The specific positions of the first heat pipes 4 need to be designed according to requirements of the heat removal after the reactor shutdown. During normal operation, gas can also flow over the portion of each first heat pipe 4 outside the reactor core. The first heat pipe 4 functions similarly to a reactor core fins, thus utilizing a fin-like principle to increase the heat exchange area and dissipate heat from the reactor core body 1. After the reactor shutdown, the first heat pipe 4 remove heat from the reactor core. The specific position and number of first heat pipe 4 are determined actually based on calculations. For example, in some embodiments, as shown in FIG. 1, the reactor core structure of the nuclear power source includes four first heat pipes 4, and the four first heat pipes 4 are arranged along a circumferential direction of the reactor core body 1 and centered on the axis of the reactor core body 1.

In an embodiment, the reactor core structure of the nuclear power source further includes a first expansion member 8. The reactor core body 1 is provided with the hole for the first heat pipe 4 to pass through. An expansion gap is formed between the inner circumference of each hole and the outer circumference of a corresponding first heat pipe 4. The first expansion member 8 is filled and arranged in the expansion gap. The first expansion member 8 is made of a thermally conductive material, thus conducting heat between the first heat pipe 4 and the reactor core body 1. The material of the first expansion member 8 can be, but is not limited to, stainless steel.

In such an arrangement, considering the thermal expansion of the reactor core body 1 and a relatively rigid connection between the reactor core body 1 and the first heat pipe 4, the expansion amount of the reactor core body can be calculated. By enlarging the diameter of the hole, and filling the channel with the flexible first expansion member 8, the rigid connection-induced stress between the first heat pipe 4 and the reactor core body 1 can be reduced, and the problem of the poor heat transfer arising from the rigid connection-induced gap between the first heat pipe 4 and the reactor core body 1 is mitigated.

The first expansion member 8 can be, but is not limited to, an expandable wire mesh ball structure. The first expansion member 8 can be clamped between the inner circumferential wall of the hole and the outer circumferential wall of the first heat pipe 4, thereby facilitating heat conduction by making contact with the corresponding surfaces at multiple points. Furthermore, the first expansion member 8 can adaptively deform when the dimension of the expansion gap changes, thereby maintaining a normal heat exchange between the reactor core body and the first heat pipe 4.

It should be noted that, compared with a conventional heat pipe reactor, the first heat pipes 4 in this embodiment, serving as auxiliary heat exchange structures, have a relatively small number, thereby saving space. Furthermore, each first heat pipe 4 can be configured to have a relatively large diameter, and the hole can be designed to have an allowance for the thermal expansion of the reactor core body 1. The first expansion member 8 fills the space between the first heat pipe 4 and the hole for heat conduction, thus reducing the rigid connection-induced stress between the first heat pipe 4 and the reactor core body 1, and mitigating the problem of the poor heat transfer arising from the gap. The significant reduction in the number of heat pipes greatly reduces installation difficulty thereof.

Referring to FIG. 1, in an embodiment, the reactor core structure of the nuclear power source further includes the reflector 5, a reactor core power control mechanism 6, and a second heat pipe 9. The reflector 5 is disposed around the reactor core body 1 to recover neutrons. The reactor core power control mechanisms 6 can be dispersedly arranged in the reflector 5 and can be control drums. The second heat pipes 9 can be dispersedly arranged in the reflector 5. The specific positions and number of the second heat pipes 9 can be calculated based on actual reactor core residual heat. Each second heat pipe 9 and each reactor core power control mechanism 6 can be arranged along the axial direction of the reactor core body 1. Under normal operating conditions, the second heat pipes 9 can dissipate heat from the reactor core power control mechanisms 6 and the reflector 5.

The material of the reflector 5 is a thermally conductive material, which can be, but is not limited to, stainless steel. The reflector 5 can dissipate heat outwards through thermal conduction, thereby improving the overall heat dissipation efficiency of the gas-cooled fast reactor.

In some embodiments, as shown in FIG. 1, multiple reactor core power control mechanisms 6 and multiple second heat pipes 9 are arranged. Optionally, the multiple reactor core power control mechanisms 6 and the multiple second heat pipes 9 can be distributed along the circumferential direction of the reflector 5, respectively. Furthermore, the second heat pipes 9 are arranged alternately with the reactor core power control mechanisms 6, that is, a second heat pipe 9 is disposed between every two adjacent reactor core power control mechanisms 6. In this way, the second heat pipes 9 can perform targeted heat conduction for their adjacent reactor core power control mechanisms 6 and adjacent areas of the reflector 5 thereof, thereby improving heat dissipation efficiency.

In some embodiments, as shown in FIG. 1, the multiple second heat pipes 9 can be arranged along the radial directions of the reflector 5, thereby increasing the number of the second heat pipes 9 along the radial directions of the reflector 5, increasing the heat exchange area between the second heat pipes 9 and the reflector 5, and improving the heat dissipation efficiency.

Furthermore, a shutdown rod hole 7 is disposed in the reactor core body 1. The shutdown rod hole 7 can be located at the central position of the reactor core body 1. The shutdown rod hole serves as a channel for an insertion and a withdrawal of the shutdown rod. The shutdown rod is used for a reactor startup or a reactor shutdown. When the reactor starts, the shutdown rod is withdrawn from the reactor core body 1, the reactor core power control mechanism 6 adjusts the power, and simultaneously a gas compressor operates to pump gas, and the gas, while passing through the gas channels 3 in the reactor core body 1, cools the reactor core. During this period, all heat pipes in the reactor core are in the startup and operation state, which means that the heat exchange area between the reactor core body 1 and the cooling medium is increased during the normal operation, and the second heat pipes 9 in the reflector 5 can cool the reactor core power control mechanisms 6 and the reflector 5. After the reactor shutdown, the reactor core residual heat is conducted by the reactor core body 1 to the first heat pipes 4 in the reactor core body 1 and to the second heat pipes 9 in the reflector 5. Additionally, the reflector 5 continues to conduct heat outward, thereby removing the reactor core residual heat in the manners described above.

A gap is formed between the outer circumferential wall of the reactor core body 1 and the inner circumferential wall of the reflector 5, which facilitates the operation of installation between the reactor core body 1 and the reflector 5 and provides the allowance for the thermal expansion and contraction of the reactor core body 1. Moreover, a second expansion member can be arranged between the reactor core body 1 and the reflector 5. That is, the second expansion member can be filled and arranged in the gap between the reactor core body 1 and the reflector 5. The second expansion member is made of a thermally conductive material, thus conducting heat between the reactor core body 1 and the reflector 5. The material of the second expansion member can be, but is not limited to, stainless steel.

In some embodiments, the reactor core structure of the nuclear power source further includes fuel. The fuel has a pellet structure. Optionally, the fuel can be, but is not limited to, pressurized water reactor (PWR) fuel pellets. The fuel is disposed in the fuel channels 2. High-temperature gas-cooled reactors (HTGRs), particularly prismatic HTGRs, are a significant option for current micro-reactors, and are typically filled with Tri-structural iso-tropic (TRISO) fuel, which has a very low effective fuel volume fraction. After being loaded into a graphite or ceramic base body, the effective fuel volume fraction becomes even lower, which will result in a larger reactor core volume, so that the overall uranium volume fraction is relatively low, which may lead to a significant increase in the volume of the reactor core body 1 and a relatively short refueling cycle.

In an embodiment, however, it is advised to use classic PWR fuel pellet style, which can reduce costs. Because, for the same power level, the power density of the fuel in the gas-cooled fast reactor power source is much lower than that of a conventional large PWR fuel, the thermal resistance of a gas gap will not cause a significantly increase in the fuel temperature. Considering that the overall precision of the reactor core body 1 might be lower than that of fuel rod cladding, the diameter of the fuel channel 2 can be appropriately increased to facilitate the loading of fuel pellets. The center-to-center distance between fuel channels 2 can be calculated based on the actual conditions of the gas-cooled fast reactor, but should not be excessively large, thereby minimizing the volume of the reactor core body 1.

The fuel in an embodiment can be uranium dioxide ($UO_2$), which is loaded into the fuel channel 2 of the reactor core body 1. The fuel channel 2 is a through-hole penetrating the fuel region of the reactor core. After the fuel pellets are loaded into the fuel channel 2, two ends thereof are sealed. The configurations of the fuel pellets are consistent with those of the heat pipe reactors and the conventional fuel rods, which will not be described repeatedly herein. In the embodiment, the thermal conduction of the reactor core body 1, and the first heat pipes 4 and the second heat pipes 9 are used for removing residual heat, thereby solving the problem of difficult in removing residual heat in gas-cooled fast reactors. Simultaneously, the fuel adopts a pellet structure, thereby making the entire solution more feasible from an engineering perspective.

Referring to FIG. 1, multiple fuel channels 2 are arranged. Any three mutually adjacent fuel channels 2 are arranged in an equilateral triangular arrangement, which allows for a more compact arrangement of the fuel channels 2 in the reactor core body 1.

In some embodiments, the reactor core body 1 is provided with slits for relieving stress. The slits are arranged along the axial direction of the reactor core body 1, and multiple slits are distributed along the circumferential direction of the reactor core body 1. Specifically, the cross-section of the reactor core body 1 can be designed as a circle, a polygon, or any other shape according to actual requirements. The reactor core body 1 can be fabricated as a single monolithic piece or, as required, be segmented into sector-shaped or triangular sections via the slits, which can reduce the overall internal stress of the reactor core body 1. However, it is required to maintain the continuity of the reactor core body from the central region to the peripheral edge, thus effectively ensuring heat conduction from the central region of the reactor core body 1 to the periphery thereof.

In some embodiments, the reactor core body 1 is processed and formed using three-dimensional printing (3D printing). That is, the reactor core body 1 can be directly and integrally formed by 3D printing. Alternatively, the reactor core body 1 is formed by stacking and connecting multiple layers. In this method, holes can be first formed in individual layers through processes such as etching, and then the multiple layers are stacked and consolidated into a monolithic structure in manners of fixed connection such as diffusion welding.

In this application, eliminating uneven reactor core power distribution can be flexibly achieved by methods such as reducing the fuel diameter, lowering the fuel uranium enrichment, increasing the diameter or number of the gas channels 3, or replacing the fuel at locations of the hot points with heat pipes. These flexible and varied approaches effectively address the problem of uneven reactor core power distribution.

Referring to FIG. 2, a processing method for a reactor core structure of a nuclear power source provided by another embodiment of the present application includes following steps.

Obtaining multiple layers. The manner of obtaining the layers may include: sectioning the reactor core body 1 into multiple layers. The layers are stacked along the axial direction of the reactor core body 1. That is, the reactor core body 1 is first sectioned into relatively thin layers, which can facilitate the subsequent processing of the gas channels 3. Alternatively, the multiple layers can also be individually and independently processed and formed.

Hole machining is performed on each layer along the axial direction thereof to form a fuel channel 2 and a gas channel 3. Since each layer is relatively thin, hole machining machinery can be used to form the gas channels 3 with smaller apertures, thereby further increasing the heat exchange area between the cooling medium and the reactor core body 1. The hole machining can include, but is not limited to, various processes such as etching or mechanical machining.

Adjacent layers are stacked and fixedly connected along axial directions thereof, and the gas channels 3 located at corresponding positions are aligned with and connected to each other, that is, the multiple layers are connected into an integral whole, and the multiple gas channels 3 are interconnected to form a unified gas channel 3 to allow for a smooth flow of the cooling medium.

The gas channels 3, which are formed by using current processing techniques to drill holes directly into the reactor core body 1, have relatively large apertures, and it is difficult to create gas channels 3 with very small diameters. However, in this embodiment, the reactor core body 1 is sectioned into multiple thin layers first, and the hole machining is performed on each layer, and then the multiple thin layers are connected into an integral whole, thus the gas channels 3 with even smaller apertures can be formed in the layers by using the traditional hole machining machinery, so that the gas channels 3 can be distributed more densely in the reactor core body 1, thereby significantly increasing the effective heat exchange area between the cooling medium and the reactor core body 1, and effectively reducing the temperature difference between the cooling medium and the heat exchange wall surface of the gas channels 3, thereby enabling the metal materials to be used for manufacturing the reactor core body 1, and reducing the constraints on the material selection of the reactor core body 1.

The connection manner between adjacent layers can be, but is not limited to, diffusion welding, which enables adjacent layers to be pressurized at high temperatures without causing visible deformation or relative movement, thereby ensuring high-quality welded connections.

In some embodiments, performing hole machining on each layer along the axial direction thereof includes following steps.

A corresponding gas volume flow rate is obtained based on thermal engineering calculation. Qv denotes the gas volume flow rate. A corresponding gas flow cross-sectional area is obtained by a preset gas flow velocity. *V* denotes the gas flow velocity, and $A_{flow}$ denotes the gas flow cross-sectional area. That is:

$$Q_v = V \times A_{flow} \qquad\qquad \text{(Equation 1)}$$

$$A_{flow} = N \times \pi \times D^2 / 4 \qquad\qquad \text{(Equation 2)}$$

where, *N* denotes the number of gas channels, and *D* denotes the diameter of the gas channel. It should be noted that the preset gas flow velocity can be an economical flow velocity of the gas, namely, a gas flow velocity selected after comprehensively considering heat transfer efficiency, flow-induced vibration, driving technology of the gas driving equipment, and cooling costs, and the preset gas flow velocity is a common empirical value.

A temperature difference between the reactor core body 1 and the cooling medium is selected based on the material thermal stress and temperature constraints of the reactor core body 1. *ΔT* denotes the temperature difference between the heat exchange wall surface of the reactor core body 1 and the gas medium.

The heat exchange area is derived based on the temperature difference between the reactor core body 1 and the cooling medium. $A_{exchange\ heat}$ denotes the heat exchange area. That is:

$$Q_{thermal\ power} = h \times \Delta T \times A_{exchange\ heat} \qquad\qquad \text{(Equation 3)}$$

where, *h* denotes the heat transfer coefficient; $Q_{thermal\ power}$ denotes the reactor core power and is a preset value. It is obtained that:

$$A_{exchange\ heat} = Q_{thermal\ power} / (h \times \Delta T).$$

The apertures and the number of the gas channels 3 are obtained based on the heat exchange area and the gas flow cross-sectional area. That is:

$$A_{exchange\ heat} = N \times \pi \times D \times H \qquad\qquad \text{(Equation 4)}$$

Equation 2 is substituted to obtain:

$$A_{exchange\ heat} = 4 \times A_{flow} \times H / D \qquad\qquad \text{(Equation 5)}$$

where H denotes the height of the reactor core body 1.

That is, equation 5 is substituted into equation 3 to obtain:

$$Q_{thermal\ power} = 4 \times h \times \Delta T \times A_{flow} \times H / D \qquad\qquad \text{(Equation 6)}$$

and it is further obtained that:

$$D \; = \; 4 \, \times \, h \, \times \, \varDelta T \, \times \, A_{flow} \times \, H \, / \, Q_{thermal \; power};$$

and

$$N \; = \; 4 \, \times \, A_{flow} \, / \, (\pi \, \times \, D^2).$$

Given that the gas flow cross-sectional area is constant, the smaller the apertures of the gas channels 3, the larger the heat exchange area, which makes the temperature difference between the heat exchange wall surface of the reactor core body 1 and the gas medium decrease proportionally, i.e., the impact of high temperature on the material selection for the reactor core body 1 is significantly reduced.

The reactor core body of the present application can be formed by specially processing metal material. The apertures of the gas channels 3 can be on the millimeter scale without changing the volume of the reactor core body 1, and compared with that of the conventional gas channels with centimeter-scale apertures, the heat exchange area of the gas channels increases by at least 3 to 10 times. Furthermore, based on the narrow channel effect of small hole, the heat transfer coefficient of the gas channels can also be enhanced, that is, the heat exchange temperature difference can be reduced to 1/3 to 1/10 or even less of the original value. In the application, the heat exchange temperature difference is generally controlled within 20°C, and the reactor core outlet temperature is below 650°C, which enables metal material such as stainless steel to be used for the reactor core body of gas-cooled fast reactors, thereby mitigating the constraints on the reactor core body material selection.

The technical features of the above-mentioned embodiments can be combined arbitrarily. In order to make the description concise, not all possible combinations of the technical features in the above-mentioned embodiments are described. However, as long as there is no contradiction in the combination of these technical features, they should be considered to be within the scope of this specification.

The above-described embodiments merely represent several implementations of the present application. The descriptions thereof are relatively specific and detailed, but they should not be construed as limiting the scope of the application. It should be noted that, for a person of ordinary skill in the art, various modifications and improvements can be made without departing from the spirits of the present application, and these modifications and improvements all fall within the scope of protection of the present application. Therefore, the scope of protection of the present patent application shall be determined by the appended claims.

**Claims**

1. A reactor core structure of a nuclear power source, **characterized in that** the reactor core structure of the nuclear power source comprises:

   a reactor core body (1), a material of the reactor core body (1) being a metal material;
   a fuel channel (2) disposed in the reactor core body (1); and
   gas channels (3) configured to allow cooling medium to flow, wherein the number of the gas channels (3) is multiple, and the gas channels (3) are disposed circumferentially outside the fuel channel (2).

2. The reactor core structure of the nuclear power source according to claim 1, wherein an aperture of each of the gas channels (3) is equal to or less than 3 mm.

3. The reactor core structure of the nuclear power source according to claim 1, wherein the material of the reactor core body (1) is stainless steel.

4. The reactor core structure of the nuclear power source according to claim 3, wherein the material of the reactor core body (1) is type 316 stainless steel.

5. The reactor core structure of the nuclear power source according to claim 1, wherein the reactor core structure of the nuclear power source comprises a first heat pipe (4), and the first heat pipe (4) is disposed in the reactor core body (1).

6. The reactor core structure of the nuclear power source according to claim 5, wherein the reactor core structure of the nuclear power source further comprises a first expansion member (8); a hole is disposed in the reactor core body (1) and configured to allow the first heat pipe (4) to pass through; an expansion gap is formed between an inner circumference of the hole and an outer circumference of the first heat pipe (4); and the first expansion member (8) is filled and arranged in the expansion gap, and the first expansion member (8) is made of a thermally conductive material.

7. The reactor core structure of the nuclear power source according to claim 1, wherein the reactor core structure of the nuclear power source further comprises a reflector (5), a reactor core power control mechanism (6), and a second heat pipe (9); the reactor core power control mechanism (6) is disposed in the reflector (5); the second heat pipe (9) is disposed in the reflector (5); and the second heat pipe (9) is arranged side by side with the reactor core power control mechanism (6).

8. The reactor core structure of the nuclear power source according to claim 7, wherein a material of the reflector (5) is a thermally conductive material.

9. The reactor core structure of the nuclear power source according to claim 7, wherein multiple second heat pipes (9) are arranged along radial directions of the reflector (5).

10. The reactor core structure of the nuclear power source according to claim 1, wherein multiple fuel channels (2) are arranged, and any three mutually adjacent fuel channels (2) are arranged in an equilateral triangular arrangement.

11. The reactor core structure of the nuclear power source according to claim 1, wherein the reactor core body (1) is provided with slits for relieving stress; each of the slits is arranged along the axial direction of the reactor core body (1); and multiple slits are distributed along a circumferential direction of the reactor core body (1).

12. The reactor core structure of the nuclear power source according to claim 1 or 11, wherein the reactor core body (1) is processed and formed by three-dimensional printing, or the reactor core body (1) is formed by stacking and connecting multiple layers.

13. A processing method for a reactor core structure of a nuclear power source, based on the reactor core structure of the nuclear power source according to any one of claims 1-12, and comprising:

    obtaining multiple layers;
    performing hole machining on each layer along the axial direction thereof to form the fuel channel (2) and the gas channels (3); and
    stacking and fixedly connecting adjacent layers along axial directions thereof.

14. The processing method for the reactor core structure of the nuclear power source according to claim 13, wherein stacking and fixedly connecting adjacent layers along the axial directions thereof comprises:
    connecting the adjacent layers into an integral whole by diffusion welding.

15. The processing method for the reactor core structure of the nuclear power source according to claim 13, wherein performing the hole machining on each layer along the axial direction thereof comprises:

    obtaining a corresponding gas volume flow rate based on thermal engineering calculation, and obtaining a corresponding gas flow cross-sectional area based on a preset gas flow velocity;
    selecting a temperature difference between the reactor core body (1) and cooling medium based on material and temperature constraints of the reactor core body (1);
    deriving a heat exchange area based on the temperature difference between the reactor core body (1) and the cooling medium; and
    obtaining apertures and the number of the gas channels (3) based on the heat exchange area and the gas flow cross-sectional area.

FIG. 1

FIG. 2

## INTERNATIONAL SEARCH REPORT

| International application No. |
|---|
| **PCT/CN2024/074255** |

| A. | CLASSIFICATION OF SUBJECT MATTER |
|---|---|

G21C5/14(2006.01)i

According to International Patent Classification (IPC) or to both national classification and IPC

| B. | FIELDS SEARCHED |
|---|---|

Minimum documentation searched (classification system followed by classification symbols)

G21C (IPC)

Documentation searched other than minimum documentation to the extent that such documents are included in the fields searched

Electronic data base consulted during the international search (name of data base and, where practicable, search terms used)

CNTXT, ENTXTC, DWPI: 核, 电源, 堆芯, 基体, 金属, 燃料, 气体, 孔, 通道, nuclear, power supply, core, matrix, metal, fuel, gas, hole, channel

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116469584 A (CHINA NUCLEAR POWER TECHNOLOGY RESEARCH INSTITUTE CO., LTD. et al.) 21 July 2023 (2023-07-21) <br> claims 1-12, description, paragraphs 0039-0079, and figures 1-2 | 1-15 |
| Y | CN 112102972 A (CHINA INSTITUTE OF ATOMIC ENERGY) 18 December 2020 (2020-12-18) <br> description, paragraphs 0036-0044, and figures 1-4 | 1-15 |
| Y | CN 113270206 A (CHINA NUCLEAR POWER ENGINEERING CO., LTD.) 17 August 2021 (2021-08-17) <br> description, paragraphs 0032-0051, and figures 1-5 | 1-15 |
| Y | CN 110634580 A (HARBIN ENGINEERING UNIVERSITY) 31 December 2019 (2019-12-31) <br> description, paragraphs 0032-0042, and figures 1-2 | 1-5, 7-15 |
| A | CN 113205892 A (CHINA NUCLEAR POWER ENGINEERING CO., LTD.) 03 August 2021 (2021-08-03) <br> entire document | 1-15 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 April 2024** | **11 April 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/074255** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 110232979 A (XI'AN JIAOTONG UNIVERSITY) 13 September 2019 (2019-09-13)<br>entire document | 1-15 |
| A | CN 113270205 A (CHINA NUCLEAR POWER ENGINEERING CO., LTD.) 17 August 2021 (2021-08-17)<br>entire document | 1-15 |
| A | US 2022139579 A1 (WESTINGHOUSE ELECTRIC CO., LLC.) 05 May 2022 (2022-05-05)<br>entire document | 1-15 |
| A | WO 2021178182 A1 (WESTINGHOUSE ELECTRIC CO., LLC.) 10 September 2021 (2021-09-10)<br>entire document | 1-15 |
| A | WO 2022206064 A1 (CHINA NUCLEAR POWER ENGINEERING CO., LTD.) 06 October 2022 (2022-10-06)<br>entire document | 1-15 |

Form PCT/ISA/210 (second sheet) (July 2022)

## INTERNATIONAL SEARCH REPORT
### Information on patent family members

International application No.

**PCT/CN2024/074255**

| Patent document cited in search report | | | Publication date (day/month/year) | Patent family member(s) | | | Publication date (day/month/year) |
|---|---|---|---|---|---|---|---|
| CN | 116469584 | A | 21 July 2023 | None | | | |
| CN | 112102972 | A | 18 December 2020 | None | | | |
| CN | 113270206 | A | 17 August 2021 | None | | | |
| CN | 110634580 | A | 31 December 2019 | None | | | |
| CN | 113205892 | A | 03 August 2021 | None | | | |
| CN | 110232979 | A | 13 September 2019 | None | | | |
| CN | 113270205 | A | 17 August 2021 | None | | | |
| US | 2022139579 | A1 | 05 May 2022 | WO | 2022094594 | A1 | 05 May 2022 |
| | | | | WO | 2022094594 | A4 | 02 June 2022 |
| | | | | KR | 20230098228 | A | 03 July 2023 |
| | | | | EP | 4238108 | A1 | 06 September 2023 |
| | | | | TW | 202236305 | A | 16 September 2022 |
| | | | | TWI | 803037 | B | 21 May 2023 |
| | | | | JP | 2023549097 | A | 22 November 2023 |
| | | | | CA | 3196861 | A1 | 05 May 2022 |
| WO | 2021178182 | A1 | 10 September 2021 | EP | 4229658 | A1 | 23 August 2023 |
| | | | | CA | 3170602 | A1 | 10 September 2021 |
| | | | | TW | 202147339 | A | 16 December 2021 |
| | | | | JP | 2023517308 | A | 25 April 2023 |
| | | | | AU | 2021229381 | A1 | 29 September 2022 |
| | | | | US | 2023107838 | A1 | 06 April 2023 |
| | | | | KR | 20220140863 | A | 18 October 2022 |
| | | | | BR | 112022017722 | A2 | 01 November 2022 |
| WO | 2022206064 | A1 | 06 October 2022 | CA | 3212782 | A1 | 06 October 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023103828681